# DEMANDE DE BREVET EUROPEEN

(11) **EP 3 549 685 A1**
(43) Date de publication de la demande: **09.10.2019**
(21) Numéro de dépôt: 19165392.2
(22) Date de dépôt: 27.03.2019
(51) Int. Cl.: B08B 9/055, F16L 55/38

(54) **NETTOYEUR D'UNE TUYAUTERIE**

(30) Priorité: 27.03.2018 FR 1852624
(71) Demandeur: Westair, 29510 Briec (FR)
(72) Inventeur: TERMET, Sébastien, 29170 FOUESNANT (FR)
(74) Mandataire: Ipside

(57) **Abrégé**

L'invention concerne un nettoyeur d'une tuyauterie comportant un corps (20) s'étendant entre une première extrémité (21) et une deuxième extrémité (22), le corps (20) comporte :
- au moins deux lèvres (23, 24) dont une première lèvre (23) est proximale de la première extrémité (21) et la deuxième lèvre (24) est proximale de la deuxième extrémité (22), chaque lèvre est circulaire ;
- deux têtes d'appui (25, 26), la première tête d'appui (25) est disposée entre la première extrémité (21) et la première lèvre (23), la deuxième tête d'appui (26) d'appui est disposée entre la deuxième extrémité (22) et la deuxième lèvre (24).

Le corps (20) comporte un noyau (28) constitué d'une partie en matériau dur, dont ledit matériau dur a une dureté mesurée par l'échelle de Shore D compris entre 30 et 100, les deux têtes d'appui (25, 26) sont en matériau dur, le noyau (28) étant surmoulé partiellement d'un matériau souple dont ledit matériau souple a une dureté mesurée par l'échelle de Shore A compris entre 0 et 50, les lèvres étant constituées par le matériau souple, l'ensemble est monobloc et symétrique de rotation par l'axe longitudinale (L) du corps (20).

## Description

### DOMAINE TECHNIQUE DE L'INVENTION

La présente invention concerne un nettoyeur d'une tuyauterie. Elle s'applique, en particulier, à toute tuyauterie nécessitant le nettoyage à l'aide d'un nettoyeur qui est poussé par un fluide, air ou eau en général.

### ÉTAT DE LA TECHNIQUE

Il est connu d'avoir recours à un nettoyeur pour nettoyer une tuyauterie.

Le nettoyeur est composé d'un corps comprenant généralement deux lèvres et deux têtes d'appui. Les deux têtes d'appui sont situées aux extrémités du corps.

Certains nettoyeurs existants sont en plusieurs parties, ce qui implique une mauvaise raclabilité sur les bords de la tuyauterie du fait que des parties puissent être mal montées ou qu'il existe une mauvaise hygiène car des polluants s'insèrent entre les parties du nettoyeur.

D'autres nettoyeurs ont un diamètre trop petit et ne sont pas efficaces.

Il existe aussi des nettoyeurs non flexibles où dont les dimensions sont trop justes et peuvent être bloqués à cause d'une mauvaise soudure dans une tuyauterie. Lors du déblocage, il y a un risque de détérioration du matériel et de l'humain. En effet, l'utilisateur doit débloquer manuellement sans savoir où est le nettoyeur. Lors d'un blocage, le nettoyeur est toujours poussé par une pression ce qui augmente la pression localement au niveau du blocage. Au moment du déblocage toute la pression est libérée ce qui propulse le nettoyeur à une grande vitesse non souhaitée et non maitrisée.

### OBJET DE L'INVENTION

La présente invention vise à remédier à ces inconvénients.

A cet effet, la présente invention vise un nettoyeur d'une tuyauterie comportant un corps s'étendant entre une première extrémité et une deuxième extrémité, le corps comporte :
- au moins deux lèvres dont une première lèvre est proximale de la première extrémité et la deuxième lèvre est proximale de la deuxième extrémité, chaque lèvre est circulaire ;
- deux têtes d'appui, la première tête d'appui est disposée entre la première extrémité et la première lèvre, la deuxième tête d'appui est disposée entre la deuxième extrémité et la deuxième lèvre ;
le nettoyeur étant remarquable en ce que le corps comporte un noyau constitué d'une partie en matériau dur, dont ledit matériau dur a une dureté mesurée par l'échelle de Shore D compris entre 30 et 100, les deux têtes d'appui sont en matériau dur, le noyau étant surmoulé partiellement d'un matériau souple dont ledit matériau souple a une dureté mesurée par l'échelle de Shore A compris entre 0 et 50, les lèvres étant constituées par le matériau souple, l'ensemble est monobloc et symétrique de rotation par l'axe longitudinal du corps.

La dureté est une qualité physique indiquant la résistance au toucher, à la pression, au choc et à l'usure. Par définition, l'échelle de dureté Shore mesure la dureté des élastomères, comme certains matières plastiques, des cuirs et des bois.

Cette échelle a été développée dans un but de réaliser des mesures hors laboratoire avec un duromètre Shore portable (par exemple pour mesurer la dureté des pneus de véhicules).

La mesure est basée sur la déformation d'un ressort en fonction d'un déplacement connu. La qualité du ressort détermine donc la qualité de l'appareil

Il existe en fait douze échelles de mesure Shore. Les plus courantes sont les échelles A et D, reconnues notamment par les normes ISO 868 et 7619, ASTM D 2240 et DIN 53505 :
- Shore A (pour les matériaux mous) ;
- Shore D (pour les matériaux durs).

Le cadran du duromètre est gradué en degrés SHORE de 0 à 100, de mou à dur.

Le matériau dur a une dureté de Shore D compris entre 30 et 100.

Selon un exemple de réalisation, le matériau dur est un plastique dur.

Exemple, non exhaustif de matériau dur : POM (acronyme de polyformaldéhyde), pehd (acronyme de polyéthylène haute densité), Pa6.6 (acronyme de polyamide 6.6), PA6 (acronyme de polyamide 6), PE (acronyme de polyéthylène), TP (acronyme de thermoplastiques). De manière très générale, on appelle ici thermoplastique tout matériau comportant un certain pourcentage de matériau thermoplastique constituant une matrice, qu'il s'agisse d'un matériau constitué seulement de matériau thermoplastique ou encore par exemple d'un matériau composite à fibres continues et à matrice thermoplastique, PP (acronyme de polypropylène), PVC (acronyme de polychlorure de vinyle), ABS (acronyme de acrylonitrile butadiène styrène), PFA (acronyme de perfluoroalkoxy), PVDF (acronyme de polyfluorure de vinylidène)...

Le matériau souple a une dureté Shore A compris entre 0 et 50.

Selon un exemple de réalisation, le matériau souple est un plastique souple.

Exemple, non exhaustif de matériau souple : FMVQ (acronyme de fluorosilicone), MVQ (acronyme d'un élastomère en vinyle-méthyle-polysiloxane), FFKM (acronyme de perfluoroélastomères), FKM (acronyme de Fluoroélastomère), NR (acronyme de Caoutchouc naturel, polyisoprène naturel), NBR (acronyme de caoutchouc nitrile, copolymère butadiène-acrylonitrile), CR (acronyme de Polychloroprène), HNBR (acronyme de copolymère butadiène-acrylonitrile hydrogéné), PTFE (acronyme de polytétrafluoroéthylène), EPDM (acronyme de Éthylène-propylène-diène monomère), EPDM-EPT (acronyme de éthylène-propylène- diène monomère), PU (acronyme de Polyuréthane), TPU (acronyme de Polyuréthane thermoplastique), MFQ (acronyme d'un caoutchoucs silicones contenant des groupements méthyles et fluorés), CSM (acronyme de Polyéthylène chlorosulfoné,), IIR (acronyme de polyisobutylène), CO (acronyme de Polychlorométhyloxyrane)...

Grâce à ces dispositions, le nettoyeur n'a pas de zone de rétention et permet un nettoyage efficace des parois de la tuyauterie. Il a des zones flexibles (matériau souple) et accepte les défauts d'un tuyau (soudure, impacts) sans bloquer.

Il est étanche dans la phase de raclage, lorsqu'il passe dans la tuyauterie, il pousse intégralement le produit.

Les lèvres effectuent une pression sur le diamètre intérieur de la tuyauterie pour pousser le produit contenu de la tuyauterie tout en nettoyant les parois de la tuyauterie et permettant de pouvoir réutiliser la tuyauterie nettoyée pour un nouveau produit.

Le nettoyeur est étanche et permet un nettoyage hygiénique de la tuyauterie.

Le nettoyeur est monobloc, donc perméable et indépendant de son environnement extérieur. Lors de son utilisation le raclage par les lèvres circulaires permet de garantir le nettoyage de tout le tuyau sans fuite à 360°. Il passe dans les coudes de courbure réelle mini 1,3D (c'est-à-dire 1,3 fois le diamètre).

Selon une variante, l'écartement des deux lèvres est au moins supérieur au diamètre intérieur inférieur (exemple diamètre intérieur -5%) de la tuyauterie selon les tableaux usuels des norme des tuyauteries (SMS, DIN, MACON, ISO...).

Selon une autre variante, l'écartement deux lèvres est au moins supérieur au diamètre intérieur de la tuyauterie.

Il fonctionne avec une faible pression de pousse (économie d'énergie). Hors densité du produit et en ligne droite le delta de pression du raclage (effort des lèvres sur la tuyauterie de concentricité usuelle plus ou moins 5% du diamètre nominal) est de 150mbar à 300 mbar.

Il y a des applications dans de nombreux domaines comme l'agroalimentaire, la pharmacie, la cosmétique...

L'invention est avantageusement mise en oeuvre selon les modes de réalisation et les variantes exposées ci-après, lesquelles sont à considérer individuellement ou selon toute combinaison techniquement opérante.

Dans un mode de réalisation, la liaison entre le matériau dur et le matériau souple est assurée par une prise de force mécanique par l'intermédiaire d'ancrage.

Dans un mode de réalisation, le nombre de lèvre est égal à deux, le nettoyeur comporte deux lèvres : la première lèvre et la deuxième extrémité.

Dans un mode de réalisation, la première extrémité et la deuxième extrémité comporte chacune une partie bombée en matériau souple prévue pour amortir le nettoyeur lorsqu'il arrive en butée.

Dans un mode de réalisation, le corps (20) comporte :
- un premier diamètre le plus petit situé au milieu du corps selon l'axe longitudinal,
- un deuxième diamètre correspond au diamètre de mesure de la tête d'appui, le deuxième diamètre est supérieur au premier diamètre,
- un troisième diamètre correspond au diamètre de chaque lèvre, le troisième diamètre est plus grand que le deuxième diamètre.

Dans un mode de réalisation, entre le deuxième diamètre et le troisième diamètre se trouve un creux.

Dans un mode de réalisation, la liaison entre le matériau dur et le matériau souple est assurée par une adhérisation par les surfaces de contact lors d'un surmoulage.

Dans un mode de réalisation, le noyau comporte au moins un aimant. L'aimant permet la gestion de la position du nettoyeur.

Dans un mode de réalisation, le noyau comporte au moins deux aimants, un premier aimant étant positionné au niveau de la première extrémité du corps et le deuxième aimant étant positionné au niveau de la deuxième extrémité du corps.

Dans un mode de réalisation, le noyau comporte au moins deux groupes d'aimants, un premier groupe d'aimants étant positionné au niveau de la première extrémité du corps et un deuxième groupe d'aimants étant positionné au niveau de la deuxième extrémité du corps.

Dans un mode de réalisation, la valeur du diamètre de chaque lèvre est de cinq à trente pourcent, de préférence de quinze à vingt-cinq pourcents, plus grande que le diamètre de chaque tête d'appui.

Dans un mode de réalisation, il est défini un ensemble d'un nettoyeur et d'une tuyauterie, ladite tuyauterie ayant un diamètre intérieur et étant prévue pour être nettoyée par le nettoyeur, la géométrie du nettoyeur est la suivante :
- le diamètre des lèvres est égal au diamètre intérieur de la tuyauterie plus cinq à quinze pourcents ;
- l'entraxe des lèvres est égal au diamètre intérieur de la tuyauterie moins neuf à dix-neuf pourcents.

Dans un mode de réalisation lié au précédent, la géométrie du nettoyeur comporte également les éléments suivants :
- le diamètre des têtes d'appui est égal au diamètre intérieur de la tuyauterie moins cinq à quinze pourcents ;
- l'entraxe des têtes d'appui est égal au diamètre intérieur de la tuyauterie plus vingt-cinq à trente cinq pourcents.

Dans un mode de réalisation lié au précédent, la géométrie du nettoyeur comporte également les éléments suivants :
- la longueur entre deux extrémités du corps est égale au diamètre intérieur de la tuyauterie plus soixante-dix à quatre-vingt-dix pourcents.

### BRÈVE DESCRIPTION DES FIGURES

D'autres avantages, buts et caractéristiques de la présente invention ressortent de la description qui suit faite, dans un but explicatif et nullement limitatif, en regard des dessins annexés, dans lesquels :
- la figure 1 représente une vue en perspective du nettoyeur selon un mode de réalisation particulier du nettoyeur objet de la présente invention,
- la figure 2 représente une vue de côté du nettoyeur selon un mode de réalisation particulier du nettoyeur objet de la présente invention,
- la figure 3 représente une vue en coupe transversale du nettoyeur selon un mode de réalisation particulier du nettoyeur objet de la présente invention,
- la figure 4 représente une vue en perspective du noyau selon un mode de réalisation particulier du nettoyeur objet de la présente invention,
- la figure 5 représente une vue en coupe partielle du nettoyeur selon un mode de réalisation particulier du nettoyeur objet de la présente invention,
- la figure 6 représente une vue en coupe de deux nettoyeurs dans un tuyau selon un mode de réalisation particulier du nettoyeur objet de la présente invention,
- la figure 7 représente une vue en coupe d'un nettoyeur dans un coude de tuyau selon un mode de réalisation particulier du nettoyeur objet de la présente invention,
- la figure 8 représente autre vue en coupe transversale du nettoyeur selon un mode de réalisation particulier du nettoyeur objet de la présente invention.

### DESCRIPTION D'EXEMPLES DE REALISATION DE L'INVENTION

Le nettoyeur est placé dans une tuyauterie et est poussé par un fluide. Dans notre cas, le fluide est de l'air.

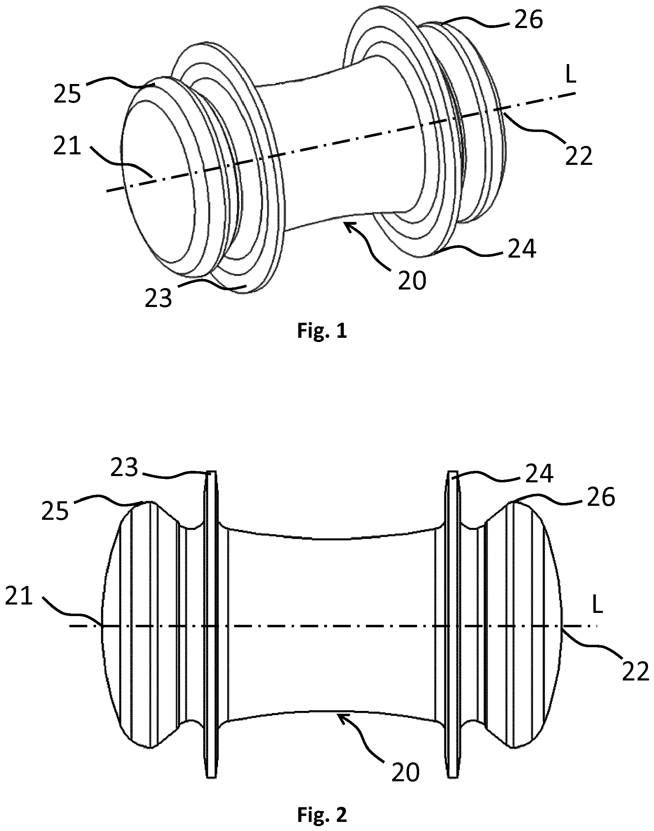

La figure 1 représente une vue en perspective du nettoyeur.

Le nettoyeur est constitué d'une pièce en plastique, matériau dur, surmoulé partiellement d'un plastique souple (matériau souple) monobloc comme par exemple un élastomère.

L'ensemble monobloc est symétrique en rotation par rapport à l'axe L longitudinal.

Des aimants sont fixés dans le corps en plastique rigide (non représenté sur cette figure).

La liaison entre les deux matériaux est assurée par une prise en force mécanique du matériau souple sur le matériau dur au niveau des encrages et par adhérisation entre les surfaces de contacts entre les deux matériaux lors de la phase de surmoulage du matériau souple sur le matériau dur.

L'encrage est un ergot ou une autre lèvre dans le matériau dur qui vu de l'extérieur est sur le matériau souple.

Il est à noté que les matériaux sont déterminés en fonction de la compatibilité chimique avec les produits en contact (produit nettoyé et/ou agent de nettoyage et/ou fluide de pousse).

En fonction des combinaisons de matériaux durs (ou rigides) et souples obtenues le process d'obtention du nettoyeur peut être une injection à chaud ou à froid du surmoulage.

Le nettoyeur d'une tuyauterie comporte un corps 20 s'étendant entre une première extrémité 21 et une deuxième extrémité 22.

Le corps 20 comporte au moins deux lèvres 23 et 24 dont une première lèvre 23 est proximale de la première extrémité et la deuxième lèvre 24 est proximale de la deuxième extrémité. Dans une autre variante, non représentée, les deux lèvres sont doublées. Dans une autre variante, non représentée, le corps comporte une pluralité de lèvres.

Le corps 20 comporte deux têtes d'appui 25 et 26, la première tête d'appui 25 est disposée entre la première extrémité et la première lèvre, la deuxième tête 26 d'appui est disposée entre la deuxième extrémité et la deuxième lèvre. Chaque tête d'appui est en matériau dur et permet le guidage lors de courbure de la tuyauterie. Chaque tête d'appui ressemble à un disque. Le noyau est composé d'une forme cylindirque circulaire et des deux disques.

Le corps comporte un noyau constitué d'une partie en matériau dur, dont ledit matériau dur a une dureté de Shore D. Le noyau est surmoulé partiellement d'un matériau souple dont ledit matériau souple a une dureté Shore A. Les lèvres sont constituées par le matériau souple. L'ensemble est monobloc et symétrique de rotation par l'axe longitudinale (L) du corps.

Le matériau souple est sur la partie externe du corps entre les têtes d'appui 25 et 26. Le matériau souple recouvre partiellement le côté extérieur des têtes d'appui (ou disque).

Dans l'exemple représenté, chaque extrémité comporte une partie en matériau souple réalisé par un surmoulage afin de réduire les chocs au moment de l'arrêt du nettoyeur. La forme de chaque extrémité est bombée. L'arrêt du nettoyeur est réalisé par exemple par un élément de blocage ou d'arrêt dans la tuyauterie, le nettoyeur est poussé jusqu'à cette zone.

Le matériau souple est à chaque extrémité.

Dans une autre variante, non représentée, il y a juste une extrémité qui possède un matériau souple.

La figure 2 représente une vue de côté du nettoyeur.

La figure 2 reprend les éléments de la figure 1.

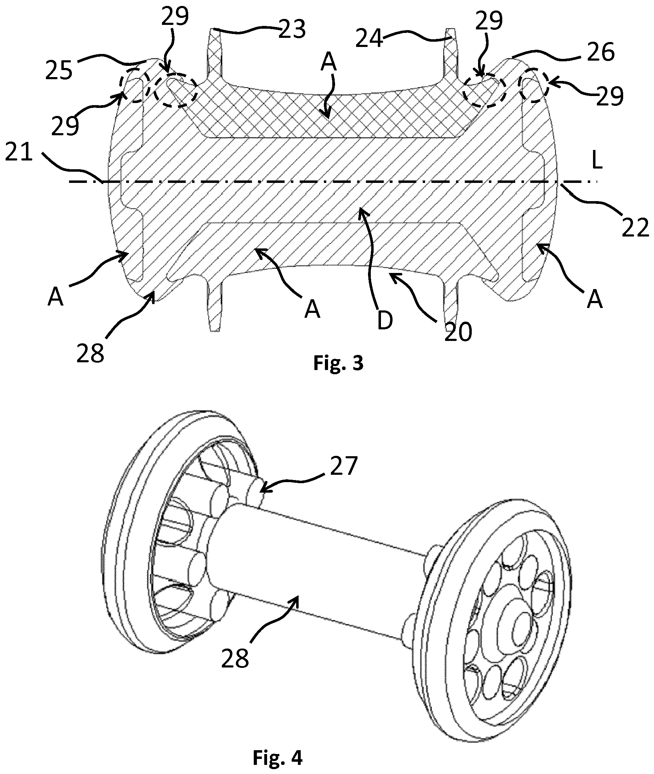

La figure 3 représente une vue en transversale du nettoyeur.

La figure 3 reprend certains éléments de la figure 1.

Il est visible sur cette figure la référence A pour le matériau souple et la référence D pour le matériau dur (les hachures sont dans la même direction mais les références A et D désignent bien les deux types de matériau).

Le noyau 28 est de section sensiblement deux fois plus petit que le diamètre du corps, ce qui permet une certaine flexibilité du corps et surtout du noyau composé d'une partie centrale (dans notre exemple cylindrique circulaire) et des deux disques (têtes d'appui).

La figure 4 représente une vue en perspective du noyau.

Il est montré sur cette figure le noyau 28 ainsi qu'un aimant 27.

Le noyau 28 est constitué d'une partie cylindrique circulaire et à chaque extrémité des disques.

Sur cette figure, il est montré plusieurs aimants 27 positionnés à chaque extrémité du noyau 28. Dans l'exemple représenté, un groupe d'aimants est positionné à chaque extrémité, il y a cinq aimants 27 à chaque extrémité. L'aimant 27 est circulaire cylindrique et est positionné dans un trou circulaire dans le disque.

Dans une variante, non représentée, le nettoyeur comporte un aimant 27, positionné au centre. Dans une autre variante, non représentée, le nettoyeur comporte au moins un aimant à chaque extrémité positionné au niveau des têtes d'appui.

Les aimants sont insérés dans chaque extrémité des têtes d'appui afin de permettre la détection du nettoyeur à travers la tuyauterie. Un détecteur magnéto-inductif détecte la présence du nettoyeur, permettant de réaliser le programme et le cyclage automatique du processus (position du nettoyeur) : départ, arrivées, et/ou position(s) intermédiaire(s).

Des trous traversant à chaque extrémité permettent lors du surmoulage de laisser passer le matériau souple de l'autre côté de chaque tête d'appui de sorte que le matériau souple se trouve autour du noyau 28 et à chaque extrémité du corps.

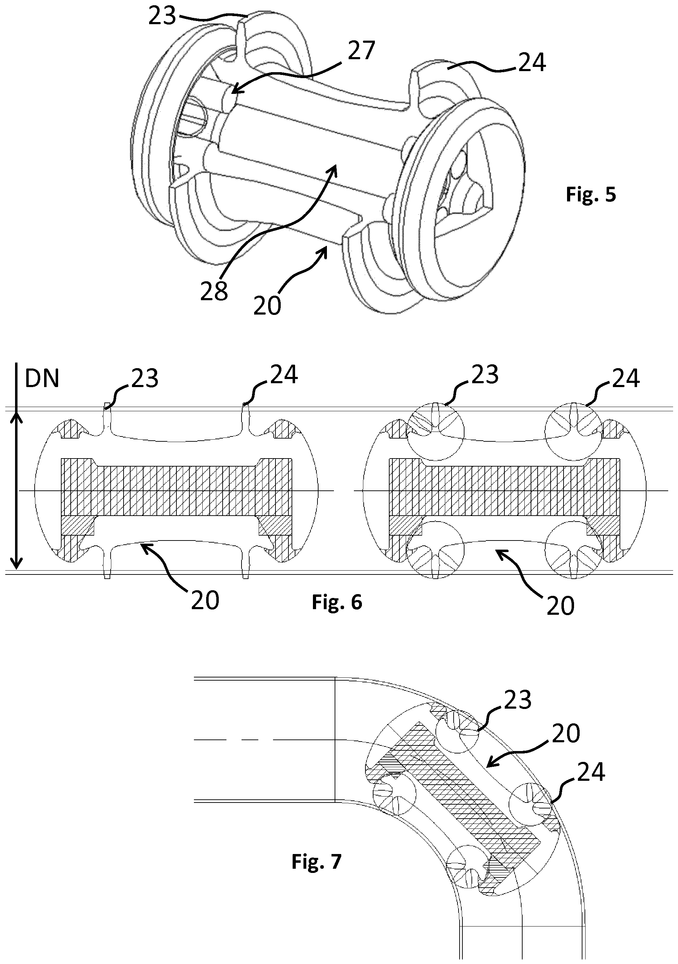

La figure 5 représente une vue en coupe partielle du nettoyeur.

On retrouve le noyau 28 avec les deux disques de chaque côté dont l'extrémité des disques est la tête d'appui. Les disques comportent des trous pour loger les aimants 27 et des trous traversant pour laisser passer le matériau souple au niveau de chaque extrémité du corps. De cette manière, la matière souple permet d'amortir les chocs pour l'arrêt du nettoyeur.

La figure 6 représente une vue en coupe de deux nettoyeurs dans un tuyau.

Cette figure montre un premier nettoyeur à gauche avec les lèvres qui dépassent pour montrer les dimensions.

Le diamètre intérieur de la tuyauterie est noté DN.

Les dimensions sont les suivantes :
La valeur du diamètre de chaque lèvre est de quinze à vingt-cinq pourcent plus grande que le diamètre de chaque tête d'appui. Ainsi, le guidage est assuré par les têtes d'appui et au moins une lèvre qui est toujours en contact avec les bords intérieurs de la tuyauterie.

Selon un exemple, la géométrie du nettoyeur est la suivante :
- le diamètre des lèvres est égal au diamètre intérieur de la tuyauterie plus cinq à quinze pourcents (DN + 5 à 15%) ; dans l'exemple représenté, diamètre des lèvres = DN +10%,
- l'entraxe des lèvres est égal au diamètre intérieur de la tuyauterie moins neuf à dix-neuf pourcents (DN - 9 à 19%) ; dans l'exemple représenté, entraxe des lèvres = DN-14%,
- le diamètre des têtes d'appui est égal au diamètre intérieur de la tuyauterie moins cinq à quinze pourcents (DN - 5 à 15%) ; dans l'exemple représenté, diamètre tête d'appui = DN -10%,
- l'entraxe des têtes d'appui est égal au diamètre intérieur de la tuyauterie plus vingt-cinq à trente cinq pourcents (DN + 25 à 35%) ; dans l'exemple représenté, l'entraxe des têtes d'appui = DN +30%,
- la longueur entre deux extrémités du corps est égale au diamètre intérieur de la tuyauterie plus soixante-dix à quatre-vingt-dix pourcents (DN + 70 à 90%) ; dans l'exemple représenté, la longueur hors tout = DN +80%.

Le nettoyeur de droite représente la courbure des lèvres 23 et 24.

La figure 7 représente une vue en coupe d'un nettoyeur dans un coude de tuyau.

Cette figure représente le corps et surtout la courbure des lèvres 23 et 24 dans un coude. Les lèvres sont courbées et lors de la poussée du nettoyeur permettent de nettoyer les bords intérieurs du tuyau. Les lèvres sont courbées. Les lèvres touchent toujours les bords de la tuyauterie.

Il est noté que les têtes d'appui servent de guidage pour orienter le nettoyeur dans la tuyauterie.

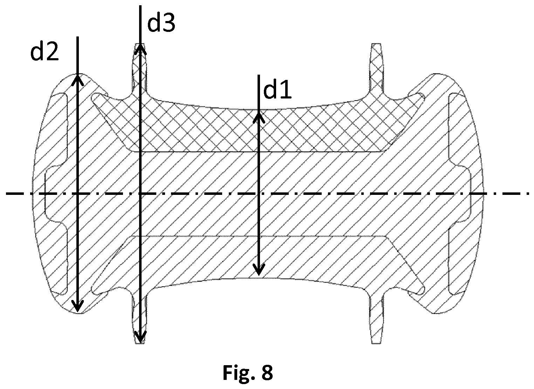

La figure 8 représente une vue en transversale du nettoyeur avec certains diamètres liés au corps.

Le corps 20 comporte :
- un premier diamètre d1 le plus petit situé au milieu du corps selon l'axe longitudinal L,
- un deuxième diamètre d2 correspond au diamètre de mesure de la tête d'appui, le deuxième diamètre d2 est supérieur au premier diamètre d1,
- un troisième diamètre d3 correspond au diamètre de chaque lèvre, le troisième diamètre d3 est plus grand que le deuxième diamètre d2.

Dans un exemple, le deuxième diamètre d2 est égal au premier diamètre d1 plus cinq à trente pourcents. Le troisième diamètre d3 est égal au premier diamètre d1 plus dix à cinquante pourcents.

Dans l'exemple représenté entre le deuxième diamètre d2 et le troisième diamètre d3 se trouve un creux.

Le creux permet aux lèvres 23 et 24 de se courber

### NOMENCLATURE

- 20: corps
- 21: première extrémité
- 22: deuxième extrémité
- 23: première lèvre
- 24: deuxième lèvre
- 25: première tête d'appui
- 26: deuxième tête d'appui
- 27: aimant
- 28: noyau
- 29: encrage

- L: axe longitudinal
- A: matériau souple
- D: matériau dur

## Revendications

1. Nettoyeur d'une tuyauterie comportant un corps (20) s'étendant entre une première extrémité (21) et une deuxième extrémité (22), le corps (20) comporte :
- au moins deux lèvres (23, 24) dont une première lèvre (23) est proximale de la première extrémité (21) et la deuxième lèvre (24) est proximale de la deuxième extrémité (22), chaque lèvre est circulaire ;
- deux têtes d'appui (25, 26), la première tête d'appui (25) est disposée entre la première extrémité (21) et la première lèvre (23), la deuxième tête d'appui (26) d'appui est disposée entre la deuxième extrémité (22) et la deuxième lèvre (24) ;
le nettoyeur étant **caractérisé en ce que** le corps (20) comporte un noyau (28) constitué d'une partie en matériau dur, dont ledit matériau dur a une dureté mesurée par l'échelle de Shore D compris entre 30 et 100, les deux têtes d'appui (25, 26) sont en matériau dur, le noyau (28) étant surmoulé partiellement d'un matériau souple dont ledit matériau souple a une dureté mesurée par l'échelle de Shore A compris entre 0 et 50, les lèvres étant constituées par le matériau souple, l'ensemble est monobloc et symétrique de rotation par l'axe longitudinal (L) du corps (20).

2. Nettoyeur selon la revendication 1, dans lequel la liaison entre le matériau dur et le matériau souple est assurée par une prise de force mécanique par l'intermédiaire d'ancrage.

3. Nettoyeur selon la revendication 1, dans lequel le nombre de lèvre est égal à deux, le nettoyeur comporte deux lèvres : la première lèvre (23) et la deuxième extrémité (22).

4. Nettoyeur selon la revendication 1, dans lequel la première extrémité (21) et la deuxième extrémité (22) comporte chacune une partie bombée en matériau souple prévue pour amortir le nettoyeur lorsqu'il arrive en butée.

5. Nettoyeur selon la revendication 1, dans lequel le corps (20) comporte :
- un premier diamètre (d1) le plus petit situé au milieu du corps selon l'axe longitudinal (L),
- un deuxième diamètre (d2) correspond au diamètre de mesure de la tête d'appui, le deuxième diamètre (d2) est supérieur au premier diamètre (d1),
- un troisième diamètre (d3) correspond au diamètre de chaque lèvre, le troisième diamètre (d3) est plus grand que le deuxième diamètre (d2).

6. Nettoyeur selon la revendication 5, dans lequel entre le deuxième diamètre (d2) et le troisième diamètre (d3) se trouve un creux.

7. Nettoyeur selon la revendication 1, dans lequel la liaison entre le matériau dur et le matériau souple est assurée par une adhérisation par les surfaces de contact lors d'un surmoulage.

8. Nettoyeur selon la revendication 1, dans lequel le noyau (28) comporte au moins un aimant (27).

9. Nettoyeur selon la revendication 1, dans lequel le noyau (28) comporte au moins deux aimants (27), un premier aimant (27) étant positionné au niveau de la première extrémité (21) du corps (20) et le deuxième aimant (27) étant positionné au niveau de la deuxième extrémité (22) du corps (20).

10. Nettoyeur selon la revendication 1, dans lequel le noyau (28) comporte au moins deux groupes d'aimants (27), un premier groupe d'aimants (27) étant positionné au niveau la première extrémité (21) du corps (20) et un deuxième groupe d'aimants (27) étant positionné au niveau de la deuxième extrémité (22) du corps (20).

11. Nettoyeur selon la revendication 1, dans lequel la valeur du diamètre de chaque lèvre est de cinq à trente pourcent, de préférence de quinze à vingt-cinq pourcent, plus grande que le diamètre de chaque tête d'appui.

12. Ensemble d'un nettoyeur selon la revendication 1 et d'une tuyauterie, ladite tuyauterie ayant un diamètre intérieur (DN) et étant prévue pour être nettoyée par le nettoyeur, la géométrie du nettoyeur est la suivante :
- le diamètre des lèvres est égal au diamètre intérieur de la tuyauterie plus cinq à quinze pourcents (DN + 5 à 15%) ;
- l'entraxe des lèvres est égal au diamètre intérieur de la tuyauterie moins neuf à dix-neuf pourcents (DN - 9 à 19%).

13. Ensemble selon la revendication 12, dont la géométrie du nettoyeur comporte également les éléments suivants :
- le diamètre des têtes d'appui est égal au diamètre intérieur de la tuyauterie moins cinq à quinze pourcents (DN - 5 à 15%) ;
- l'entraxe des têtes d'appui est égal au diamètre intérieur de la tuyauterie plus vingt-cinq à trente cinq pourcents (DN + 25 à 35%).

14. Ensemble selon la revendication 13, dont la géométrie du nettoyeur comporte également les éléments suivants :
- la longueur entre deux extrémités du corps (20) est égale au diamètre intérieur de la tuyauterie plus soixante-dix à quatre-vingt-dix pourcents (DN + 70 à 90%).
